# EUROPEAN PATENT APPLICATION

(11) **EP 1 595 786 A2**
(43) Date of publication of application: **16.11.2005**
(21) Application number: 04705095.0
(22) Date of filing: 26.01.2004
(51) Int. Cl.: B63C 7/00

(54) **METHOD OF IMMOBILISING HYDROCARBONS INSIDE SUBMERGED CONTAINERS OR OF TRANSPORTING SAID HYDROCARBON TO THE SURFACE, USING THE PROPERTIES OF SUPERCRITICAL FLUIDS AT A GREAT DEPTH**

(30) Priority: 24.01.2003 ES 200300180; 14.03.2003 ES 200300618
(71) Applicant: CONSEJO SUPERIOR DE INVESTIGACIONES CIENTIFICAS, 28006 Madrid (ES)
(72) Inventor: PRIETO BARRANCO, J. Inst. de Catalisis Y Petrole-, Campus Decantoblanco, 28049 Madrid (ES)
(74) Representative: Ungria Lopez, Javier
(86) International application number: PCT/ES2004/070003
(87) International publication number: WO 2004/065526

(57) **Abstract**

The invention relates to a method of immobilising a hydrocarbon contained inside a container submerged in the sea floor or of transporting said hydrocarbon to the surface using the pressure gradient between the pressure in the sea floor and the pressure generated at the lower opening of a hydrostatic column in which the fluid used as the supercritical fluid is gasified when same moves to non-extreme pressure conditions.

## Description

### SECTOR OF THE ART

The present invention falls within the field of treatment of hydrocarbons or other polluting substances for applications in confinement, extraction and transportation thereof, with implications in maintenance of the environment and of marine salvage. Furthermore, the device designed in the present invention falls within the sector of machinery and mechanical equipment.

### STATE OF THE ART

When the viscosity of crude oil or gasoil diesel transported in the tanks of a ship is not sufficiently high under the conditions in which it is being carried, and it flows to the outside following an accident at sea, due to the appearance of cracks or via the actual ventholes of the storage tanks, it has recently been demonstrated, the technology available for cutting off the leaks has to be improved or that it is not sufficiently efficient.

A supercritical fluid is characterised in that, under certain conditions of temperature and pressure, beyond the critical point, it has a behaviour which combines properties of liquids (capacity for dissolving) and gases (very high diffusibility). This phenomenon is used in supercritical extraction, which is usually characterised by a high selectivity towards certain extracts (Extraction with supercritical gases, Chem. Eng. Sci. Vol 36, No. 11, p. 1769, 1981. High Pressure Extraction of oil seed, JACOS, Vol 62, No. 8, 1985).

The present patent protects a method whose purpose is to modify the chemical composition of the hydrocarbon in the vicinity of the crack by altering its viscosity and/or density, for example enriching it in heavy components, with the aim of halting the flow of hydrocarbon towards the outside, or permitting its deposition on the sea floor, and, in a second level, a modification of this technique with the aim of diminishing the viscosity of the major part of the mass to transport, which would facilitate transportation of the stored crude oil up to the surface, making use of a gasification phenomenon of the supercritical fluid in the evacuation column for the fluid towards the outside.

### DESCRIPTION

### Brief description

The use of a supercritical fluid can alter the physico-chemical properties of the hydrocarbon present in the tank of an oil tanker sunk at a great depth. The fluid will behave as a supercritical fluid bearing in mind the pressure conditions existing in this environment.

There are two uses that can be considered starting from this technique and which are the object of protection of this patent:
1. Acting with a suitable supercritical fluid on a portion of the hydrocarbon in the vicinity of a crack, a selective extraction of the lightest fractions can be performed and thereby to enrich the hydrocarbon in the heaviest fractions, which could cause the crack to be sealed when the hydrocarbon mass, in its natural tendency to discharge, pushes this high viscosity portion towards the crack.
2. By acting with the suitable supercritical fluid on the entire mass of the hydrocarbon, dissolving it non-selectively, this can facilitate its fluidity and later exit towards the outside via a duct. Moreover, the use of the experimental plant that has been constructed for experimentally corroborating the first hypothesis a collateral result has being obtained that can encourage this process of discharge towards the outside. So, owing to the particular features of the basic equipment constructed, during the process of releasing the pressure, once the extraction has been carried out it has been observed that the already treated hydrocarbon was transformed into a relatively compact foam (with an appearance similar to a gel or an emulsion). This phenomenon is produced when gasifying the supercritical fluid contained in it, when the pressure drops. From this phenomenon, a process can be derived which, taking advantage on the one hand of the more fluid nature of the hydrocarbon obtained due to the presence of a supercritical fluid and, on the other, its conversion into a low viscosity and density foam, could facilitate its transport from the depths up to the surface as detailed in Example 2.

### Detailed description

The present invention is based on the fact that the inventors have observed that:
1.- insufflation of a supercritical fluid on a hydrocarbon, under experimental conditions of pressure and temperature similar to those occurring on the sea floor, selected with the intention of extracting the lightest fractions, modifies its characteristics in such a way that the resulting mixture presents a viscosity and melting point higher than the original hydrocarbon, which would encourage the sealing of a crack in a container in a natural environment, and that
2.- the release or fall of the pressure in the sealed experimental model produced gasification of the mixture, which has permitted it to be postulated that, by selecting the supercritical fluid with the intention of reducing the viscosity of the hydrocarbon and making use of the generation, in a discharge duct, of a hydrostatic column which exerts a pressure on the base of the duct much lower than that acting on the hydrocarbon mass stored in the container, a suction or chimney effect would be created on the stored crude oil permitting it to be ducted or transported to the outside.

So, an object of the present invention consists of a method for modifying the chemical composition, viscosity and/or density of a hydrocarbon, stored in a container on the sea floor or freshwater floor, with the aim of immobilising it in its interior or of transporting it to the surface, henceforth the method of the present invention, based on the use of a supercritical fluid which is such as a consequence of the pressure conditions existing at the working depth, and consisting of the following steps:
a) placing of the supercritical fluid in contact with the hydrocarbon by means of insufflation thereof in the interior of the mass of the hydrocarbon, and
b) maintenance of suitable temperature and pressure conditions so that the fluid can act as supercritical and the process of extraction or modification of the viscosity of the major part of the fractions of the hydrocarbon, as appropriate, can take place.

As used in the present invention, the term "hydrocarbon" refers to crude oil, gasoil, vacuum gasoil, diesel and other derivative components.

As used in the present invention, the term "container" refers to hulls of ships, among others, tankers, barges and fuel tanks of the actual ships.

A further object of the present invention consists of the use of the method thereof and of the device for putting it into practice in sealing cracks and fissures of containers of, among others, oil tankers sunk at sea with hydrocarbons in their interior, with the aim of immobilising and stabilising them in order to prevent their leaking or for transporting or pumping this hydrocarbon to the outside.

A particular object of the present invention consists of the method thereof where the supercritical fluid is insufflated on a portion of the hydrocarbon in the vicinity of a crack in the hull of a ship, where a selective extraction is performed of the lightest fractions, thereby enriching the hydrocarbon in its heaviest fractions. This would cause the crack to be sealed when the hydrocarbon mass, in its natural tendency to discharge, pushes this high viscosity portion towards the crack.

A particular object of the present invention consists of the method thereof where the supercritical fluid is miscible with the lightest, light and heavy fraction and even with the totality of the hydrocarbon, not dissolving it but instead modifying its viscosity bearing in mind the particular characteristics of supercritical fluids, and is applied together with the presence or not of a modifying compound. In this way, its fluidity is facilitated and its later exit or ducting is encouraged towards a pipeline for being transported to the surface, making use of the generation, in a discharge duct, of a hydrostatic column which exerts pressure on the base of the duct much lower than that acting on the hydrocarbon mass stored in the tank, as described in Example 2, with a suction or chimney effect being created on the crude oil stored in that tank (Example 2), wherein said method consists of:
a) placing of the supercritical fluid in contact with the hydrocarbon by means of insufflation thereof in the interior of the mass of the hydrocarbon, which is done via
   1.- the introduction of an external hose inside the container, or of more than one, which supplies supercritical fluid, or mixtures of various fluids, including modifying agents, beneath the opening of the drainage hose,
   2.- accompanied by the creation of a hole in the base of the tank which permits the crude oil displaced to the outside to be replaced with water, and
   3.- by a heated drainage hose, preferably introduced inside, of sufficient diameter for the discharge of the crude oil to the outside, which is flooded with water during the immersion process,
      and
b) the supercritical fluid is selected with the aim of modifying the viscosity of the hydrocarbon using a small quantity, and which is in turn supercritical under the working conditions of pressure and temperature, and which, in a gasification following the loss of these conditions, permits the generation of a low density foam, and which encourages the fluidity conditions of the mass.

Another particular object of the present invention consists of a method characterised in that, after ducting the mixture towards a pipeline, said mixture is transported towards the outside by the effect of the lower hydrostatic pressure corresponding to the column of fluid present in its interior, with respect to the hydrostatic pressure present on the outside of that pipeline, which generates a suction effect of the crude oil towards the outside (Example 2).

A particular object of the present invention consists of the method thereof where the supercritical fluid that is used has a similar chemical nature (and therefore encourages the process of extraction or dissolving or emulsifying) to that of the hydrocarbon (or any other substance contained in the tanks). This fluid can be, among others, carbon dioxide, ethylene, propylene, oxygen, methane, ethane or mixtures thereof or any other fluid with supercritical behaviour, together with the presence or not of a minority component, habitually known as the modifier. The modifier alters the selectivity of the supercritical extraction technique towards the desired products, lighter hydrocarbons, as in the method described further below in Example 1, or encourages the decrease in the viscosity of the greater part of the hydrocarbon mass, as in the method described further below in Example 2.

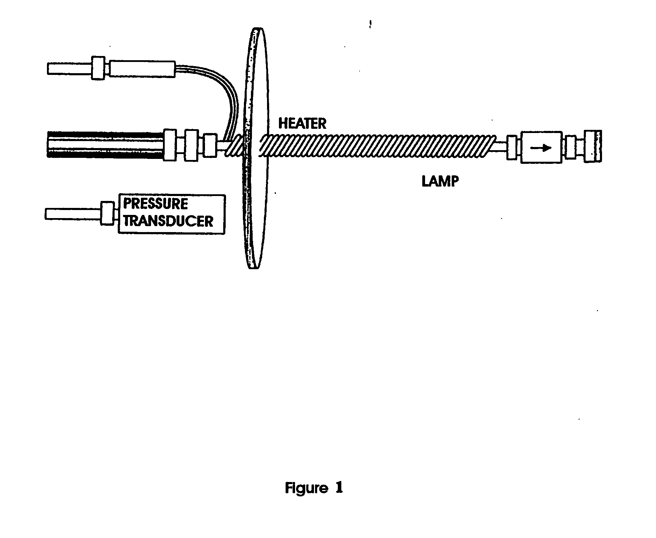

Furthermore, the technical difficulties most complex to solve would probably result from the need for heating at those depths so that the fluid could take on the supercritical condition. The heating of the fluid prior to its insufflation in the crack (if necessary) would be carried out by any means currently available, for example and among others, with a heater of the electrical resistance type with mineral insulation, sheathed in a stainless steel casing, supplied with electricity from the mother ship on the surface (see Figure 1). Any other heating method is applicable for heating the supercritical fluid and forms part of the present invention. So, another particular object of this invention consists of the method thereof in which the fluid is heated prior to being insufflated on the hydrocarbon mass.

A detailed laboratory study on the behaviour of different supercritical fluids, or their mixtures, together with the use of suitable modifiers, could lead to the development of a method based on supercritical fluids which are such at the pressures and temperatures present on the sea floor, without providing any heat. Some supercritical fluids and their critical point can be cited (Encyclopédie des gaz, Elsevier - L'air Liquide):

| **Supercritical fluid** | **Temperature** | **Pressure** | **Density** |
|---|---|---|---|
| CO₂ | TC = 31°C | PC = 74 bar | DC = 0.47 g/cc |
| O₂ (compressed gas) | TC = -118°C | PC = 50 bar | DC = 0.43 g/cc |
| Methane (compressed gas) | TC = -82°C | PC = 46 bar | DC = 0.16 g/cc |
| Ethane | TC = 32°C | PC = 49 bar | DC = 0.20 g/cc |
| Ethylene | TC = 35°C | PC = 62 bar | DC = 0.22 g/cc |

Another particular object of the present invention consists of a method thereof where the supercritical fluid used maintains its supercritical characteristics at the pressures and temperatures present in the environment where that method is being carried out, among others for example, on the sea floor with high pressures, without the need to provide heating.

An object of the present invention consists of a method for refining the specific applications of the method of the present invention and which would comprise at least:
a) a pump, provided with a refrigerated head or not, or a compressor, for pumping the fluid, stored in any kind of reservoir, which will pass to the supercritical state under the working conditions, or more than one pump or compressor, or a combination thereof, in the case of using mixtures of fluids, and other pumps in the case of using modifiers.
b) a pressure hose for ducting said fluid, and
c) an insufflation lamp (Figure 1) containing a lamp- or torch-line with stop, a heating element or not, a non-return valve and diffuser, and a pressure transducer and/or temperature sensor as accessory elements.

The quantity of fluid necessary for an immersion will depend on the volume of hydrocarbon to treat. Typically, it could be considered between one and ten stacks of 12 standardised cylinders per immersion, for the possible sealing of a crack, or much higher quantities, which could only be transported by means of other kinds of containers, such as tanker ships, for the treatment of large quantities of crude oil, as would be the case of transporting that oil to the outside.

The fluid used for these techniques is normally found in the form of liquefied gas or compressed gas, contained in pressurised cylinders on the mother ship. For using large quantities, a tanker ship can store this fluid in pressurised tanks. A pump, provided with a refrigerated head or not, or a compressor system, would pump the fluid through a pressure hose of sufficient length (and chemically compatible with the fluid) as far as the interior of the sunken hull. The reel or spool for the pressure hose can be fitted with a high-pressure rotary coupling in its central shaft permitting it to be unrolled even when connected to the fluid supply pump or compressor while the latter is being introduced into the ocean, with the aim of having an uninterrupted supply of fluid. These operations can also be carried out starting from shorter sections of high-pressure hose joined by means of high-pressure couplings, normally fast type, self-sealing or not.

Other reels of smaller size can contain coils of conductor cables for instruments such as the heater, thermocouple, pressure transmitter, etc.

An evolution of these technologies, the development of them, or the use of high-selectivity fluids, together with suitable modifiers, could permit the system to be installed even in the interior of a small submarine, for example, which would enormously facilitate the use of this technique for the tasks of sealing cracks.

It can be necessary to prevent water entering the fluid feed line and in order to do this a high-pressure non-return valve can be installed with an elastomer or metal-metal joint at the end of the hose. A diffuser can be installed at the same end (Figure 1). With the aim of maintaining a higher pressure inside the hose than that existing on the outside, a pressure transducer can be installed. From the reading of its signal, the addition pump can be adjusted so that there is always a slight over-pressure in the line compared to the outside pressure. This fact would also help to prevent the entrance of water into the supply line.

Finally, another additional object of the present invention consists of the use of the method thereof and of the device for putting it into practice in sealing cracks and fissures of containers of, among others, oil tankers sunk at sea or in lakes with hydrocarbons or other polluting substances in their interior, with the aim of immobilising and stabilising them in order to prevent their leaking or for transporting or assisting the pumping of the hydrocarbon to the outside.

### DESCRIPTION OF THE FIGURES

**Figure 1.- The insufflation lamp.** Lamp- or torch-line with stop, Heater element, Non-return valve and diffuser, Pressure transducer, Connection lines with the mother ship.
**Figure 2.- Hydrostatic pressures which act on the hydrocarbon mass and on the lower opening of a transport duct.** P1 is the hydrostatic pressure at the depth of the sinking. P2 is the hydrostatic pressure resulting from the sum of the different portions of fluid column present in the lower opening of a pipeline between the tank and the surface.
**Figure 3.- Critical temperatures and pressures of binary mixtures of CH**_{**4**} **and CO**_{**2**}**.** Data calculated on the basis of The Volumetric and Thermodynamic Properties of Fluids. a) Critical temperature; b) Critical pressure. The abscissa indicates the percentage of the binary mixtures of CH₄ and CO₂.
**Figure 4.- Density values of different CH**_{**4**} **+ CO**_{**2**} **mixtures at different temperatures, as a function of pressure.** Data calculated on the basis of The Volumetric and Thermodynamic Properties of Fluids.
**Figure 5.- Experimental device for validating the technique in ocean depths.** SCF: supercritical fluid, AIR: pneumatic or hydraulic action, VENT: venting of the drainage to the outside, P: pressure transmitter.

### EXAMPLES OF EMBODIMENT OF THE INVENTION

### Example 1.- Supercritical extraction process of the light fraction of a crude oil

A basic supercritical extraction plant **(www.icp.csic.es/control/)** has been constructed and a supercritical extraction of a hydrocarbon (vacuum gasoil) has been performed, using CO₂ as supercritical fluid on account of its innocuousness.

The experimental device has consisted of a CO₂ cylinder fitted with a siphon in order to obtain liquid CO₂ at its outlet, a reciprocating positive displacement dosing pump with refrigerated membrane head, a refrigerator for keeping the head of the pump at low temperature, the appropriate valves, a cylindrical receptacle where the gasoil has been stored with heating system, a heated valve for controlling the pressure, a low-pressure separator and a second valve for controlling the pressure, and a third separator at atmospheric pressure.

CO₂ is supercritical above 74 bar and 31°C. An extraction has been carried out with CO₂ on 250 cc of gasoil, without the addition of any modifier, at a pressure of 250 bar and a temperature of 40°C with a flow of 1 I/h of liquid CO₂ for 15 min. The ratio of CO₂ used / hydrocarbon confined was 1:1. Any other ratio is feasible for carrying out this process.

The experimental technique has consisted of:
a) The pressure has been raised to 250 bar, with CO₂ being pumped into the system, keeping the cylinder containing the sample to treat isolated via its inlet.
b) Once the pressure has been reached and with an outside temperature in the extractor of 40°C, the CO₂ has been allowed to pass through the cylinder containing the sample for 15 min.
c) The extractor has been again isolated and the plant has been depressurised.
d) As the critical point was descended through and a certain pressure was reached (between 40 and 10 bar), the plant became flooded with a foam resulting from the gasification of the liquid CO₂ retained in the sample, and the shutdown procedure was performed manually.

As a result of this extraction, a light fraction of gasoil (fluid and with a pale yellow colour) has been obtained in the separators, at a quantity of 4 cc.

The modified original fraction was difficult to characterise after being withdrawn from the cylinder containing it, due to the fact that in the process of releasing the pressure in the experimental system used, the CO₂ contained in the sample gasified as the pressure dropped and produced a foam (mousse) which contained a large quantity of occluded gas.

Part of the occluded gas has been extracted using ultrasound in order to release it, previously liquefying the hydrocarbon at 25°C, and the resulting hydrocarbon has a viscosity and melting point that are higher than those of the original, being in the liquid state starting from 19°C unlike the original which is at liquid state from 13°C. The extraction of this fraction promoted the desired change in the physical properties of the original hydrocarbon. This change in its viscosity ought to encourage the sealing of the crack. The fluid used in this laboratory experiment, CO₂, does not necessarily have to be the most suitable one for promoting this technique, though it is the most innocuous in the laboratory, at the same time as permitting a simple start-up in order to provide an initial confirmation of the technique.

Under the real application conditions of this method for sealing hydrocarbon leaks on the sea floor, the phenomenon of "gasification" in the hydrocarbon will not take place since no such depressurisation exists, and the hydrocarbon mass, concentrated in heavy fractions, will behave in accordance with the physico-chemical properties of its new composition. In the zone of sinking of a ship, the pressure is high (it increases approximately 1 bar for every 10 m in depth).

The method and device sought to be protected consists of using currently available methods (for example, a submarine with an articulated arm, remotely operated robots, etc.) in order to lower a high-pressure line or hose as far as a crack or venthole through which the hydrocarbon is flowing, and to introduce a fluid through it which, in those pressure conditions, presents supercritical behaviour. In order to do this, it can be necessary, though not essential, to heat the insufflation lamp (Figure 1). The fluid chosen should selectively dissolve the lightest fractions present in the hydrocarbon, which will tend to separate out from the heavier, undissolved, fractions owing to the difference in densities. In the vicinity of the working zone (the crack or exit opening for the crude oil to the outside), the hydrocarbon will become enriched in heavier components and its viscosity and even its density will increase. When the input of supercritical fluid stops, the mass of crude oil present in the tank, with its natural tendency to escape through the crack, would push and concentrate the portion of heavy, high viscosity, crude oil in the crack, blocking it up on account of its low capacity for flowing.

For the purpose of the methods or processes that are protected with this patent, the ocean would act as a reactor owing to the pressure existing at the depth at which the ship or any other kind of container is to be found.

### Example 2.- Process for transporting the crude oil as far as the surface

The effect observed during the depressurisation of the plant can be used for facilitating the transport of the crude oil to the outside, modifying the overall technique with the aim of performing not an extraction but instead an action on the major part of the fractions present in the hydrocarbon with supercritical fluid, modifying its density and viscosity, in order to then make use of the phenomenon of gasification of the supercritical fluid so as to encourage the discharge of the hydrocarbon through a pipeline. Later studies would be able to confirm the feasibility of a technique that permitted the discharge towards the outside of the main mass of the crude oil.

This technique would consist of the following: in the submerged end of a communication line, or pipeline, between the container and the surface, a supercritical fluid could be used selected for increasing the fluidity of the mass of crude oil, in all its fractions or not. Owing to the lower viscosity and possibly lower density, the crude oil would be encouraged to rise up through the pipeline. Close to the surface, as the pressure drops, gasification of the supercritical fluid used would take place. This gasification, and the consequent formation of foam, could alter the apparent density of the main mass present in the upper part of the communication line and cause it to become lower. In this case, the hydrostatic pressure at the end of the communication line housed inside the tank (summation of the hydrostatic pressure exerted by each of the sections of different density in that pipeline) could be lower than the hydrostatic pressure acting on the totality of the fluid contained in the tank, as a result of the pressure corresponding to the column of saltwater above it. This difference between the pressure to which the main mass contained in the tank is subjected and that existing in the opening of the communication line with the surface, housed inside the tank, together with a lower viscosity in the zone, generated by the input of the supercritical fluid, could cause a suction effect on the main mass towards the surface, which could be exploited for being transported to a container located on the outside.

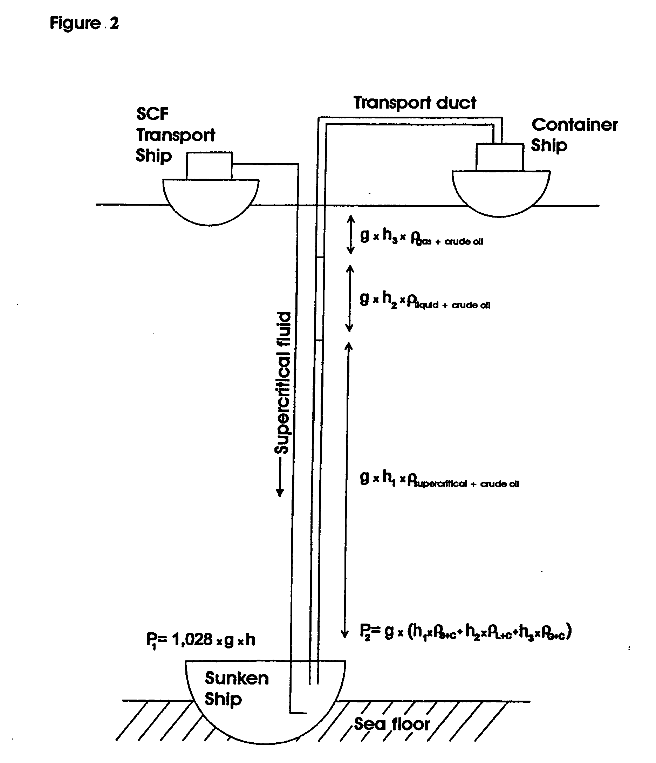

This is represented graphically in Figure 2, where P1 is the hydrostatic pressure to which the tank is subjected, and P2 is the hydrostatic pressure at the lower opening of the pipeline.

These considerations are based on the following data: the typical density of seawater beneath the layer known as the picnocline is 1.028 g/cc, independently of the temperature and salinity; the typical densities of heavy hydrocarbons, depending on the origin of the crude oil and on the fraction being considered, can vary between 0.85 and 1.01, typically 09 g/cc; the densities of the supercritical fluids, at their critical point, usually lie between 0.2 and 0.5 g/cc; though they increase with pressure (in CO₂ for example, reaching a density of 1.0 g/cc at 350 bar and 31°C); there is no data on the apparent density of the mousse formed after gasification of the supercritical fluid, which depends on the nature of the hydrocarbon and on the supercritical fluid used.

One method for carrying out the operation of extracting the crude oil to the outside could consist of the following, though without this restricting the scope of this invention and citing it only by way of example:
a) placing of the supercritical fluid in contact with the hydrocarbon by means of insufflation thereof in the interior of the mass of the hydrocarbon, which is done via
   1.- the introduction of an external hose inside the container, or more than one, which supplies supercritical fluid, or mixtures of various fluids, including modifying agents, beneath the opening of the drainage hose,
   2.- accompanied by creating a hole in the base of the tank which permits the crude oil displaced to the outside to be replaced with water, and
   3.- by a heated drainage hose, preferably introduced inside, of sufficient diameter for the discharge of the crude oil to the outside, which becomes flooded with water during the immersion process,
      and
b) the supercritical fluid is selected with the aim of modifying the viscosity of the hydrocarbon using a small quantity, and which is in turn supercritical under the working conditions of pressure and temperature, and which, when gasified following the loss of these conditions, will permit the generation of a low density foam, and which will encourage the fluidity conditions of the mass.

This supercritical fluid is not selected with the intention of carrying out an extraction or selective separation (as in Example 1), nor with the aim of dissolving the major part of the hydrocarbon (U.S. Patent 4.532.992, 1985, Method for recovering petroleum, describes the use of SCF for the extraction of crude oil from exhausted oil wells, dissolving the crude oil with supercritical fluid, and it does not come into conflict with the object of this invention, U.S. Patent 4.446.921, 1984, Method for Underground Gasification of Solid Fuel, describes a method based on the use of SCF for the extraction of crude oil from solid deposits, dissolving the crude oil with supercritical fluid, and it does not come into conflict with the object of this invention). It has been selected with the aim of modifying the viscosity of the hydrocarbon by means of a small proportion thereof, and mainly so that, once the suction effect due to the chimney effect starts, the addition of the supercritical fluid permit the right level of gasified column (as described later on), and therefore the gradient of suction force, to be maintained. Moreover, it is chosen with the intention of it is being supercritical at the pressure and temperature existing at the depth of a hypothetical sunken hydrocarbon container, in other words, 370 bar and 2°C in the case of 3600 metres.

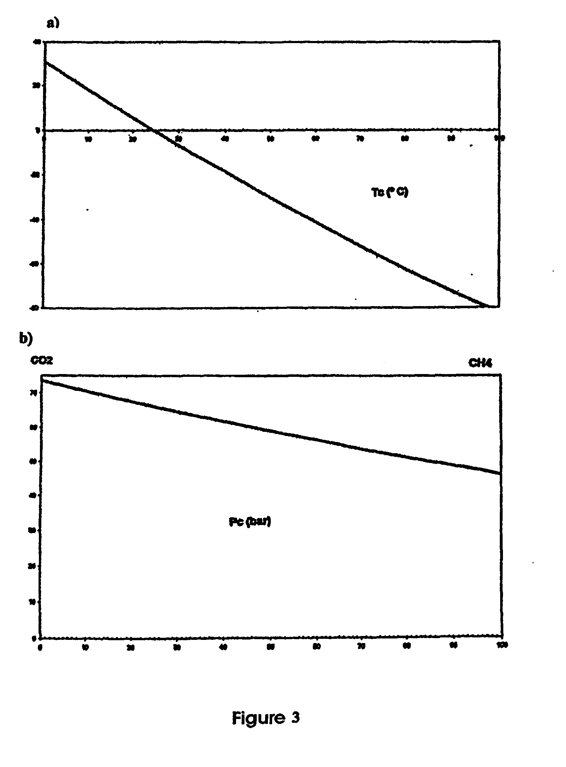

For example, the fluid 25% CH₄ + 75% CO₂ (Figure 3) has the capacity for diluting the major part of the hydrocarbon and the mixture is supercritical above 0°C and 66 bar, viz., under the working conditions on the sea floor, and without the need for any kind of heating. Data and properties of different supercritical fluids appears in TABLE 1.

**Table 1.-**

| **Properties of supercritical fluids** | | | | | | | |
|---|---|---|---|---|---|---|---|
| **SCF** | **Tc** | **Pc** | **Dc** | **Dcn** | **Cap B50** | **STATE** | **Lgcn/ LL**^{******} |
| CO₂ | 31°C | 74 bar | 0.47 g/cc | 0.0019 g/cc | 19 m³ | GL (49 bar)^{*} | 427 |
| CO₂ | -118°C | 50 bar | 0.43 g/cc | 0.0014 g/cc | 10 m³ | GC (220 bar) | 854 |
| METHANE | -82°C | 46 bar | 0.16 g/cc | 0.0007 g/cc | 11 m³ | GC (175 bar) | 630 |
| ETHANE | 32°C | 49 bar | 0.20 g/cc | 0.0013 g/cc | 11 m³ | GL (33 bar)^{*} | 432 |
| ETHYLENE | 35°C | 62 bar | 0.22 g/cc | 0.0012 g/cc | - | GC (51 bar) | 482 |

Encyclopédie des gaz, Elsevier / L'Air Liquide; SCF: supercritical fluid; Tc: critical temperature; Pc : critical pressure; Dc: critical density; Dcn: density of the gas under normal conditions; Cap B50: gas capacity (liquefied or compressed) of a cylinder of standard B50; (*) vapour pressure at 15°C; Lgcn/LL: litres of gas measured at 15°C and 1 bar released by 1 litre of liquid.

Following with the example, the fluid is mixed with the hydrocarbon (U.S. Patent 3.969.196, 1976. Process for the separation of mixtures of substances, describes the use of SCF for the extraction of substances from a mixture and it does not come into conflict with the object of this invention) which, due to being more fluid (EP 0506069, 1992, Supercritical Fluids as Diluents in Combustion of Liquid Fuels, describes how the SCFs affect the crude oil lowering its viscosity, and it does not come into conflict with the object of this invention; the following example is cited: a fuel with a viscosity of 10,300 cp at ambient temperature acquires a viscosity of 2,000 cp when heated to 50°C. By adding supercritical CO₂ up to 28% by weight, the viscosity is reduced to 40 cp) and less dense, will start to ascend up the heated drainage hose (a.3.-).

This ascension will probably not occur in piston flow but instead a set of filaments will be formed (Ejection of fuel-oil filaments from leaking points, CIEMAT, Fossil Fuels Dept., Prestige Reports). It could be advisable, though not necessary, the pumping of water from the upper part of the extraction hose with the aim of helping to break up the filaments. In any case, this pumping of water would accelerate the extraction process in the first few hours.

Considering, for example, and without being restricting, a drainage hose of diameter 10 cm and an ascending mass of, for example, 15 litres/min of SCF + 3 litres/minute of HC, or any other, the linear speed of ascent equivalent to a piston flow in that hose could be 4 m/min (6 cm/sec) (only in the event that the difference in densities were to permit this speed of ascent). So, the ascension of the mixture through a 4000 metre long pipeline would take 16 hr. This time could even be 1 or 2 days. It has to be remembered that, though it is not necessary the heating of the hose would facilitate this process of natural ascension.

When a depth is reached of, for example, and without being restricting, 300 m (the water column present in the hose generates a hydrostatic pressure at this point of 30 bar), the supercritical fluid will go over to its gas phase, being emulsified with the crude oil, until it reaches the surface (the pressure at which the supercritical fluid goes over to its gas phase will depend on, among other causes, the nature of the starting fluids and their composition in the mixture). But then, the height of the hydrostatic column above that hypothetical point situated at a depth of 300 m will not exert a pressure on that point equivalent to 30 bar, since the hydrostatic column p x g x h is generated by an emulsified fluid containing a great quantity of gas. If any density is considered, for example 1/5 of that corresponding to the crude oil, or any other, for that portion of fluid, then that hypothetical point situated at 300 m will be displaced until it reaches its equilibrium position at a depth of, for example, 1500 m, which would correspond to the height of a hydrostatic column necessary for generating a pressure of 30 bar on the lower column if the density - hypothetical - of that upper column were 0.2 g/cc (all this data has to be regarded as hypothetical, and solely for the purpose of justifying the reasoning that follows).

A situation like that described is very difficult to confirm by means of mathematical simulation, owing to the fact that the pressure at that point will be a function not just of the hydrostatic pressure generated by the column but also of the pressure loss generated by that fluid with a mousse consistency during its displacement through the pipeline, which is in turn a function of its viscosity and therefore of the temperature. At this point, and given the impossibility of determining, not even approximately, where that equilibrium point would be found, it becomes necessary to choose any value in order to be able to make any progress with the reasoning that has to back up this hypothesis. So, for example, for the following reasoning, a hypothetical equilibrium point is going to be chosen situated 1000 m below sea level, where the forces present in the system, such as the hydrostatic pressure of the column and the pressure loss experienced in the line due to the circulation of the fluid, are in balance.

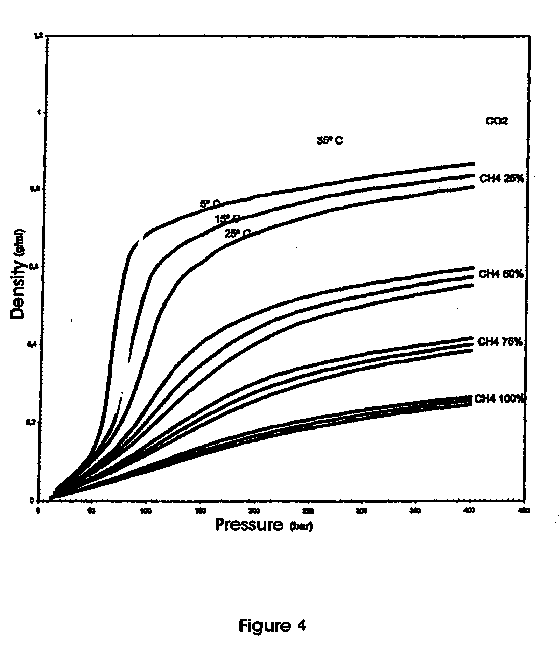

In this case, the hydrostatic columns of the column SCFliquid + hydrocarbon and SCF + hydrocarbon, situated below the column SCFgas + hydrocarbon, or mousse, would have a height of 2500 m altogether, if the ship was located at a depth of, for example, 3500 m. Making use of some typical mean values for the density of gasoil of 1.01 g/cc (Le Cedre Report on physical properties of the hydrocarbon present in the Prestige) and of 0.7 g/cc (Figure 4) for the SCF (for example, 75% CO₂ - 25% CH₄), but bearing in mind that during the evacuation process most of the stream will consist of hydrocarbon, the density of that portion of 2500 m of column could be estimated at 0.99 g/cc, for example. In this case, the hydrostatic pressure generated on the base of the drainage pipeline by this portion of column would be equivalent to 198 bar. In order to calculate the total pressure exerted on the base of the drainage hose, to this pressure will have to be added that corresponding to the portion of column occupied by the emulsion, for which the possibility had been speculated that, in its initial moment, it would consists of a column of 1000 m of density 0.2 g/cc (the density of CO₂ gas is 2×10⁻³, the density of this column will be a function of the quantity of gas dissolved in the hydrocarbon and therefore a function of the flow of SCF provided), and for which a value of 30 bar (for example, because the pressure loss has been borne in mind) has been assumed. In this case, the total pressure exerted on the base of the drainage pipeline, the summation of the total hydrostatic column, would be 30 + 198 = 228 bar. The pressure loss owing to the circulation of the crude oil through the pipeline could also be considered, which a priori is impossible to determine, but for which any conservative value can be given, for example 50 bar, or any other value, which will be mainly a function of the speed of ascent of the hydrocarbon, of its viscosity, and other parameters.

The total pressure exerted by the mass of the ocean on the hydrocarbon contained in a ship situated at a depth of 3500 m and considering a density of water, below the picnocline layer, of 1.028 g/cc, would be 360 bar.

So, the situation that is presented is that of a suction chimney where the pressure to which the hydrocarbon mass is subjected is 360 bar, and the pressure existing at the discharge opening is 278 bar (228 + 50 bar), viz., the pressure difference, or natural pump, acting in order to force the crude oil towards the outside is 82 bar (all these figures must be regarded as solely for the purpose of interpreting a phenomenon, and by way of example, with the sole object of making the reasoning that leads to conjecturing the hypothesis of the suction chimney understandable).

This natural pump will act by sucking the crude oil towards the outside at high speed, with which the pressure loss in the line will grow dramatically and therefore will reduce the flow. Once the equilibrium point or the flow has been reached that generates a pressure loss such as the pressure equilibra are established, the regulation of the discharge flow will then be done in a simple way by modifying the flow of SCF, since the height of column known as "mousse" will depend on this and so the equilibrium of the system, and therefore the discharge flow, will be able to be simply regulated: the more SCF that is provided, the greater the outlet speed of the hydrocarbon mass and vice versa, if it is wished to reduce the outlet speed, the flow of SCF will be reduced, modulating the height of the column of the phase known as the "mousse", and therefore modulating the differential pressure, or generator force, existing between the lower opening of the pipeline and the hydrocarbon mass contained in the tank. A situation in which the column of crude oil displaced totally the mousse would never take place since in that case there would not exist any gradient of pumping force.

The hydrocarbon will appear through the upper opening of the pipeline in its "mousse" form (flashing) and would be deposited in containers in a ship on the surface. At atmospheric pressure, the supercritical fluid, now gas, would be released naturally or forced out of the main hydrocarbon mass. It must be expected that the fluids used can be dangerous, for example, and without being restrictive, methane. In a case such as this, the container tanks would have to be sealed and a burner or equivalent device could be installed at the outlet to the outside (in order to avoid overpressures). The energy generated in this combustion could even be exploited for heating the pipeline by non-electrical means, or for heat exchange with the hydrocarbon stored in the container ship with the aim of releasing the gases more effectively.

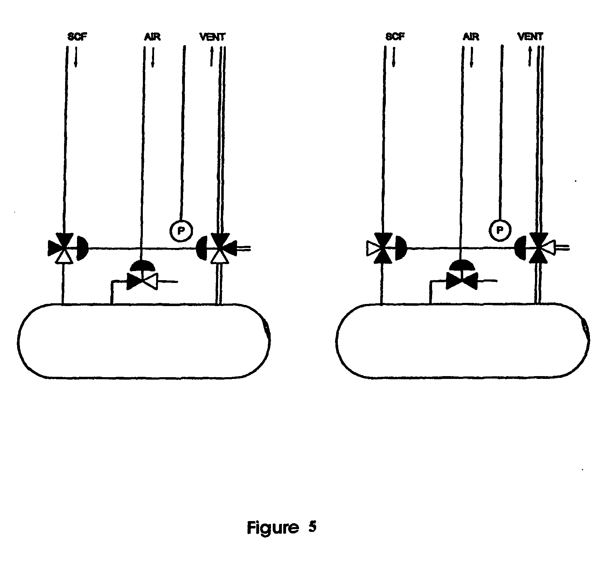

A device has been provided for validation of the procedure at a depth similar to that of the disaster. This device would consist of a tank full of crude oil and fitted with appropriate valves and sensors, and with SCF and discharge lines installed on the surface, which could be allowed to descend down to the ocean floor in a controlled manner, in order to then check the validity of the technique with an economic investment substantially lower than that needed for carrying out the extraction procedure on the crude oil stored in the ship. This could involve the use of robots or highly sophisticated techniques and methods (Figure 5). The operation of this device could be based on automatic systems controlled from the outside, using pneumatic actuation or not.

The devices needed for insufflation of the SCF can be similar to those described for the first of the examples, and be fitted with a non-return valve or not, diffuser or not, heater or not, pressure transmitters or not, temperature sensors or not, and the insufflation of the supercritical fluid could be produced inside a cone or funnel which facilitate its mixing with the crude oil or not. No description is made of the means necessary for the work of coupling these devices to the hull of the ship at those depths, but any of those permitted by the current state of the art would be valid.

## Claims

1. Method for modifying, immobilising or transporting towards the outside hydrocarbon stored in tanks submerged at great depth, **characterised in that** a fluid is insufflated which is going to be supercritical at that depth, with or without the input of heat, with the aim of extracting and separating in situ the light fractions of the crude oil in the case of immobilisation or sealing of the cracks, or of encouraging the formation of a mass of apparent low density when degasifying a supercritical fluid inside a pipeline, when the pressure drops, thereby generating a suction effect towards the outside as a result of the hydrostatic pressure present in the base of that pipeline.

2. Method according to claim 1 **characterised in that** the supercritical fluid, with or without modifier, is insufflated on a portion of the hydrocarbon in the vicinity of a crack in the container, and where a selective extraction is carried out of the lightest fractions of the hydrocarbon.

3. Method according to claim 1 **characterised in that** the supercritical fluid is insufflated on the hydrocarbon mass, initially altering its viscosity, and **in that** the supercritical fluid that is used is of a chemical nature that is similar or not to the hydrocarbon (or any other substance contained in the tanks) and is applied together with the presence or not of a modifying compound with the aim of ducting it towards a pipeline for being transported to the surface.

4. Method according to claim 3 **characterised in that** it comprises the following steps:
a) placing of the supercritical fluid in contact with the hydrocarbon by means of insufflation thereof in the interior of the mass of the hydrocarbon, which is done via
a.1.- the introduction of an external hose inside the container, or more than one, which supplies supercritical fluid, or mixtures of various fluids, including modifying agents, beneath the opening of the drainage hose,
a.2.- accompanied by creating a hole in the base of the tank which permits the crude oil displaced to the outside to be replaced with water, and
a.3.- by a heated drainage hose, preferably introduced inside, of sufficient diameter for the discharge of the crude oil to the outside, which is flooded with water during the immersion process,
and
b) where there is natural or forced maintenance of the appropriate temperature conditions so that the fluid can act as supercritical and the process of the free ascent of the treated fluid can take place until, due to the pressure conditions in the vicinity of the surface, gasification takes place of the fluid which has so far been supercritical, starting from which moment the ascent of the fluid through the pipeline will be forced by the appearance of a suction effect caused by the lower hydrostatic pressure present in the base of the pipeline with respect to the pressure present on the outside.

5. Method according to claims 3 and 4 **characterised in that**, after ducting the mixture towards a pipeline, said mixture is transported towards the outside by the effect of the lower hydrostatic pressure corresponding to the column of fluid present in its interior, with respect to the hydrostatic pressure present on the outside of that pipeline, which generates a suction effect of the crude oil towards the outside.

6. Method according to claims 3 to 5 **characterised in that**, after ducting the mixture towards a pipeline, said mixture is transported towards the outside with the aid of pumping.

7. Method according to claims 1 to 6 **characterised in that** the fluid is heated or not prior to insufflating it to the hydrocarbon mass.

8. Device for placing in operation a method according to any of claims 1 to 7 which comprises at least the following components:
a) a pump, provided with a refrigerated head or not, or a compressor, for pumping the fluid, stored in a cylinder of any kind of reservoir, which will pass to the supercritical state under the working conditions, or more than one pump or compressor, or a combination thereof, in the case of using mixtures of fluids, and other pumps in the case of using modifiers.
b) a pressure hose for ducting that supercritical fluid, and
c) an insufflation lamp (Figure 1) containing a lamp- or torch-line with stop, a heating element or not, a non-return valve and diffuser, or not, and a pressure transducer and/or temperature sensor as accessory elements.

9. Use of the method according to any of claims 1 to 5 and of the device according to claim 6 for sealing the cracks and fissures of containers of, among others, ships sunk at sea with hydrocarbons in their interior, with the aim of immobilisation and stabilisation of the hydrocarbon in order to prevent its leaking, or for the transportation of this hydrocarbon to the outside.
